# EUROPÄISCHE PATENTSCHRIFT

(11) **EP 2 411 764 B1**
(45) Veröffentlichungstag und Bekanntmachung des Hinweises auf die Patenterteilung: **20.04.2016**
(21) Anmeldenummer: 10703438.1
(22) Anmeldetag: 02.02.2010
(51) Int. Cl.: G01C 15/00, G02B 27/64, G02B 27/20

(54) **SELBSTNIVELLIERENDES LINIEN- LASERGERÄT**
SELF-LEVELLING LINE LASER DEVICE
DISPOSITIF À LASER LINÉAIRE AVEC MISE À NIVEAU AUTOMATIQUE

(30) Priorität: 26.03.2009 DE 102009001882
(43) Veröffentlichungstag der Anmeldung: 01.02.2012
(73) Patentinhaber: Robert Bosch GmbH, 70442 Stuttgart (DE)
(72) Erfinder: ZIMMERMANN, Thomas, 80639 Muenchen (DE)
(86) Internationale Anmeldenummer: PCT/EP2010/051219
(87) Internationale Veröffentlichungsnummer: WO 2010/108720

(56) Entgegenhaltungen:
- EP-A1- 1 519 147
- EP-A2- 1 469 282
- US-A- 5 872 657

## Beschreibung

### Stand der Technik

Die Erfindung bezieht sich auf ein selbstnivellierendes Linien-Lasergerät zur Erzeugung zumindest einer projizierbaren Laserlinie. Durch ein solches Gerät kann zumindest eine vorzugsweise horizontale oder vertikale Ebene mittels eines aufgeweiteten Laserstrahls aufgespannt und eine vorzugsweise horizontale oder vertikale Laserlinie beispielsweise auf Wandflächen oder Gegenstände projiziert werden. Diese projizierbare(n) Linie(n) werden hinfort als Laserlinie(n) oder projizierte Laserlinie(n) des Linien-Lasergerätes bezeichnet, obwohl das Gerät diese Linie(n) nicht selbst, sondern nur durch Projektion des aufgeweiteten Laserstrahls beispielsweise auf eine Wand oder einen Gegenstand hervorbringen kann.

Derartige Linien-Lasergeräte können insbesondere in Industrie, Handwerk und im Heimwerkerbereich beispielsweise für Justier-, Markier-, Mess- und Ausrichtaufgaben Verwendung finden.

Es sind diverse Linien-Lasergeräte aus dem Stand der Technik bekannt, mit denen horizontale und/oder vertikale Laserlinien projiziert werden können. Hierbei werden entweder Laserstrahlen durch Linsenelemente in einer Ebene aufgeweitet, wodurch sich jeweils eine Laserlinie mit einem nutzbaren Winkelbereich von ca. 60° bis 120° erzeugen lässt.

Alternativ sind auch Rotationslasergeräte auf dem Markt erhältlich, bei denen ein Laserstrahl durch ein schnell rotierendes Umlenkelement um 90° umgelenkt und so durch den mit dem rotierenden Umlenkelement umlaufenden Laserstrahl die optische Illusion einer kontinuierlichen Laserlinie erzeugt wird.

Nachteil der vorgenannten Linien-Lasergeräte aus dem Stand der Technik ist jedoch, dass die Laserleistung über einen großen Winkelbereich verteilt wird und somit Helligkeit und Sichtbarkeit der Laserlinie - insbesondere bei helleren Umgebungslicht und/oder über größere Projektionsdistanzen - unbefriedigend ist. Der Einsatz einer stärkeren Laserquelle verbietet sich in der Regel u.a. aus Sicherheitsgründen (Vermeidung von Schäden am menschlichen Auge), da die Laserleistung für derartige Geräte nach der Europäischen Norm EN 60825-1 typischerweise auf die Laserklassen 2 oder 2M und somit auf Leistungen ≦ 1 mW zu begrenzen ist. Um dieses Problem der oftmals mangelnden Sichtbarkeit der Laserlinie mit dem unbewehrten menschlichen Auge zu lösen, wurde u.a. die Verwendung von Laserbrillen, Reflektoren oder optischen Verstärkern oder elektronischen Detektoren vorgeschlagen, was jedoch einem einfachen und rationellen Einsatz derartiger Geräte oft im Wege steht.

Aus der US 5,872,657 ist u.a. ein selbstnivellierendes Lasersystem bekannt, welches es ermöglicht, einen Laserstrahl mittels eines refraktiven oder diffraktiven Elementes in mehrere horizontaler Strahlen aufzuteilen. Dabei hebt die US 5,872,657 auf die Vorteile von diffraktiven Elementen ab, die es ermöglichen auf einer Referenzebene eine Reihe von wohldefinierten Laserspots zu erzeugen. Die US 5,872,657 führt dazu aus, dass die Verwendung von einzelnen diskreten Lichtpunkten der Verwendung einer Laserlinie, wie sie sich mittels eines refraktiven Elementes ergeben würde, vorzuziehen ist, da die einzelnen Lichtpunkte eine erhöhte Sichtbarkeit gewährleisten.

Aus der EP 1 469 282 A2 ist eine Vorrichtung zum Erzeugen und Projizieren von Lichtmarken bekannt, bei welcher eine vorgesehene Projektionsoptik eine Zylinderlinse aufweist. Die Zylinderlinse ist mit einem Lichtstrahlenbündel derart bestrahlbar, dass ein Zentralstrahlenbündel einen Zylinderabschnittsbereich vollständig durchstrahlt und dass mindestens ein Randstrahlenbündel unmittelbar am Rand des Mantels des Zylinder-abschnittsbereichs vorbeiläuft. Durch das Zentralstrahlenbündel wird dabei eine Lichtmarke in Form einer Linie projiziert, während durch das Randstrahlenbündel eine Lichtmarke in Form eines Punkts projiziert wird.

Die EP 1 519 147 A1 offenbart einen optischen Strahlteiler für ein längs einer Strahlachse paralleles Lichtstrahlenbündel mit einem transparenten Zentralbereich und mehreren, zur Strahlachse jeweils um einen Reflektorwinkel geneigten, reflektierenden Reflektorflächen zur Erzeugung von je einem diskreten Punktstrahl, wobei der Zentralbereich zumindest stückweise prismatisch konvex gekrümmt ausgebildet ist und/oder eine strahlaufweitende diffraktive Optik aufweiset.

### Aufgabe der Erfindung

Aufgabe der vorliegenden Erfindung ist es, die Nachteile des Standes der Technik zu überwinden und insbesondere ein selbstnivellierendes Linien-Lasergerät bereitzustellen, dessen Laserlinie eine bessere Sichtbarkeit insbesondere mit dem unbewehrten menschlichen Auge aufweist.

### Offenbarung der Erfindung

### Vorteile der Erfindung

Diese Aufgabe wird durch das selbstnivellierende Linien-Lasergerät des Anspruchs 1 gelöst. Bevorzugte Ausführungsformen sind in den abhängigen Ansprüchen angegeben.

Erfindungsgemäß wird ein selbstnivellierendes Linien-Lasergerät mit zumindest einem Laserstrahl und Mitteln zur Aufweitung des Laserstrahls in zumindest einer Ebene vorgeschlagen, bei dem der Laserstrahl durch ein mikrooptisches Element in einer ersten Ebene aufweitbar ist.

Ein mikrooptisches Element ist ein Element, welches insbesondere diffraktive optische Elemente (DOE) und/oder mikro-refraktive optische Elemente (ROE) umfasst, wobei die letztgenannten Begriffe weiter unten näher definiert werden.

Das mikrooptische Element kann somit ein diffraktives optisches Element (DOE) oder ein mikro-refraktives optisches Element (ROE) sein oder ein solches aufweisen. "Mikro" bedeutet, dass es sich um Mikrostrukturen handelt, die an die Wellenlänge des (Laser-) Lichtes angepasst sind.

Durch ein diffraktives optisches Element lässt sich der Laserstrahl in einer präzise beeinflussbaren und weitgehend frei definierbaren Weise hinsichtlich der Intensitätsmuster und Intensitätsverteilung manipulieren, wie dies mit herkömmlichen, nicht-interferenzoptischen Elementen nicht erzielt werden könnte. Bei einem DOE sind auf dem Träger Mikrostrukturen aufgebracht (oder eingeformt), wobei vorzugsweise die Größe und/oder der Abstand der Mikrostrukturen an die Wellenlänge des Laserlichtes angepasst ist. Durch unterschiedliche optische Weglängen kommt es zu unterschiedlichen optischen Weglängen der Teilstrahlen, also zu Phasenmodulationen, wodurch Interferenzmuster entstehen. Bei mikro-refraktiven optischen Elementen (ROE) werden ebenfalls auf einen Träger Mikrostrukturen aufgebracht, wobei die Variation des Strahls durch Brechung entsteht. Im Ergebnis lassen sich über ROE im Wesentlichen ähnliche Strahlaufweitungen/-variationen realisieren wie über DOE. Das mikrooptische Element wird daher im Nachfolgenden zusammenfassend auch als interferenzoptisches Element bezeichnet.

Es stellt sich der Einsatz eines diffraktiven optischen Elementes (DOE) oder eines mikro-refraktiven optischen Elements (ROE) als besonders kostengünstig, raumsparend und montagegünstig dar.

Mit dem Begriff nicht-interferenzoptisches Element ist ein herkömmliches optisches Element aus einem optischen Material, wie bspw. Glas oder durchsichtigem Kunststoff, und einer hohen Oberflächengüte gemeint. Hohe Obergüte bezeichnet eine glatte bspw. polierte Oberfläche. Ein nicht-interferenzoptisches Element bezeichnet eine Linse (bspw. auch Zylinderlinse), bei der die optischen Effekte, wie Strahlaufweitung oder Strahlumlenkung über Strahlbrechung realisiert werden.

Ein Vorteil der Erfindung liegt in der besseren Auffindbarkeit und Erkennbarkeit der Laserlinie, insbesondere über größere Projektionsdistanzen, bei höherer Umgebungslichthelligkeit oder Störlichteinfall und/oder auf optisch uneinheitlichen, strukturierten oder stark absorbierenden (dunklen) Untergründen, durch die Überlagerung der kontinuierlichen Laserlinie mit dem durch das interferenzoptische Element diskontinuierlich aufgeweiteten Laserstrahl, dessen Serie von Laserpunkten eine höhere Helligkeit aufweist als der durch das nicht-interferenzoptische Element kontinuierlich aufgeweitete Laserstrahl. Dieser Effekt wird weiter dadurch gesteigert, dass der Helligkeitskontrast und die periodischen Intensitätsmuster der resultierenden überlagerten Laserlinie aufgrund von Simultankontrastphänomenen, lateraler Inhibition und Mustererkennungsfähigkeit höherer optischer Zentren des menschlichen Sehsinns zu einer noch besseren Erkennbarkeit der Laserlinie beitragen - insbesondere auf optisch uneinheitlichen oder strukturierten Untergründen - und dies sogar mit im Vergleich zu einer kontinuierlichen Laserlinie entsprechend höherer Helligkeit. Ein weiterer Zusatznutzen der Erfindung liegt darin, dass sich durch das interferenzoptische Element eine Serie äquidistanter Markierungspunkte innerhalb der Laserlinie erzeugen lässt, die in bestimmten Anwendungsfällen als Abstandsmaß (beispielsweise für Bohrungen oder Befestigungen) Verwendung finden können. Ein weiterer Vorteil der Erfindung liegt darin, dass durch das interferenzoptische Element ein Laserstrahl kreuzweise aufgespalten werden kann und so gleichzeitig zwei aufeinander senkrecht stehende Ebenen ausgezeichnet werden können.

In einer vorteilhaften Ausführungsform des erfindungsgemäßen Lasergeräts ist der Laserstrahl durch das mikrooptisches Element in einer ersten Ebene und/oder in einer _ zweiten Ebene aufweitbar. Auf diese Weise lässt sich über ein einzelnes optisches Element sowohl ein Laserkreuz (zwei orthogonale Linien) realisieren oder wahlweise auch zwei Einzellinien, die beispielsweise auch einzeln schaltbar sein können und die orthogonal zueinander ausgerichtet sind.

In einer bevorzugten Ausführungsform ist das erfindungsgemäße Lasergerät derart ausgestaltet, dass ein erster Laserstrahl durch ein mikrooptisches Element in einer ersten Ebene aufweitbar ist und ein zweiter Laserstrahl durch ein nicht-interferenzoptisches Element in derselben ersten Ebene aufweitbar ist, wodurch der mikrooptisch aufgeweitete Laserstrahl mit dem nicht-interferenzoptisch aufgeweiteten Laserstrahl zumindest teilbereichsweise in dieser ersten Ebene überlagerbar ist.

In einer weiteren bevorzugten Ausführungsform kann das nicht-interferenzoptische Element eine Linse mit zueinander senkrechten, die optische Achse umfassenden Ebenen unterschiedlicher Brechkraft, vorzugsweise eine Zylinderlinse aufweisen. Hierdurch lässt sich die Aufweitung des Laserstrahls einerseits sehr kostengünstig und präzise, andererseits sehr raumsparend und montagegünstig durchführen.

In einer weiteren bevorzugten Ausführungsform kann der Laserstrahl durch das interferenzoptische Element kreuzförmig in zwei aufeinander senkrecht stehenden Ebenen aufweitbar sein. Hierdurch lassen sich mit einem Laserstrahl und einem optischen Element gleichzeitig zwei Markierungsebenen auszeichnen und hierdurch Bauteile, konstruktiver Aufwand, Kosten und Bauraum einsparen.

In einer weiteren bevorzugten Ausführungsform kann durch das interferenzoptische Element in der Projektion eine Serie von Laserpunkten, die auf einer Linie, vorzugsweise auf zwei aufeinander senkrecht stehenden Linien angeordnet sind, erzeugbar sein. Durch eine solche Serie von Laserpunkten kann die Laserenergie in ein besonders günstiges Helligkeitsmuster umgewandelt werden, wodurch sich eine besonders gute Erkennbarkeit der ausgezeichneten Ebenen ergibt. Besonders vorteilhaft ist eine Serie äquidistanter Laserpunkte, die für die Erkennbarkeit der ausgezeichneten Ebene besonders vorteilhaft ist und in bestimmten Anwendungsfällen als Abstandsmaß (beispielsweise für Bohrungen oder Befestigungen) Verwendung finden kann.

In einer weiteren bevorzugten Ausführungsform kann durch diese Laserpunkte die Helligkeit der durch das nicht-interferenzoptische Element projizierbaren Laserlinie punktuell erhöhbar sein. Durch eine solche Überlagerung der durch das nicht-interferenzoptische Element projizierbaren Laserlinie durch die interferenzoptisch erzeugten Laserpunkte kann die Helligkeit der Laserlinie punktuell besonders stark erhöht und die Sichtbarkeit der Laserlinie in besonderer Weise verbessert werden.

In einer weiteren bevorzugten Ausführungsform kann zumindest ein Laserstrahl durch eine Laserdiode als Laserquelle erzeugbar sein und vorzugsweise durch zumindest ein kollimierendes optisches Element, insbesondere eine Kollimatorlinse, kollimierbar sein. Durch den Einsatz von Laserdioden als Laserquellen ist eine besonders kostengünstige Herstellung sowie eine kompaktere Bauform des Linien-Lasergerätes möglich. Mittels des kollimierenden optischen Elements kann dabei der divergente Laserstrahl, wie er von Laserdioden emittiert wird, kollimiert, also parallelgerichtet werden, wodurch eine exaktere Projektionsgeometrie unter Verwendung von interferenzoptischen und nicht-interferenzoptischen Elementen und präzisere Laserfiguren erzielt werden können.

In einer weiteren bevorzugten Ausführungsform können zumindest zwei Laserstrahlen mittels Strahlteilung vorzugsweise durch ein teilreflektierendes optisches Element aus einer Laserquelle, vorzugsweise aus einer Laserdiode auskoppelbar sein. Dies kann im einfachsten Fall durch einen teildurchlässigen Spiegel erzielt werden, der im 45°-Winkel zu dem zu teilenden Laserstrahl angeordnet ist. Hierdurch ist es möglich, eine Laserquelle einzusparen. Dies ist insbesondere vorteilhaft, wenn beispielsweise eine grüne Laserlinie durch das Linien-Lasergerät bereitgestellt werden soll, da derzeit im grünen Spektralbereich emittierende Laserquellen noch relativ hochpreisig sind.

In einer weiteren bevorzugten Ausführungsform können zumindest zwei der Laserquellen zueinander komplanar angeordnet sein. Hierdurch kann die Fertigung vereinfacht und die Lagegenauigkeit der Laserlinien erhöht werden.

In einer weiteren bevorzugten Ausführungsform kann das selbstnivellierende Linien-Lasergerät zumindest einen weiteren Laserstrahl und ein weiteres nicht-interferenzoptisches und/oder interferenzoptisches Element aufweisen. So ist es beispielsweise möglich, einen weiteren Laserstrahl durch eine Zylinderlinse oder ein diffraktives optisches Element (DOE) und/oder ROE in einer dritten Raumebene aufzuweiten und so eine dritte Laserlinie zu erzeugen, die auf den beiden anderen Laserlinien senkrecht steht und somit die dritte Raumebene auszeichnet. Anderseits kann es sich beispielsweise als vorteilhaft erweisen, den ersten Laserstrahl durch ein diffraktives optisches Element (DOE) und/oder ROE kreuzförmig in zwei aufeinander senkrecht stehenden Raumebenen aufzuweiten und hierdurch aus einem Laserstrahl eine kreuzförmige Figur aus Laserpunkten herzustellen. Diese Figur kann dann mit zwei kontinuierlichen Laserlinien, die aus zwei weiteren Laserstrahlen mittels nichtinterferenzoptischer Elemente (beispielsweise mittels zweier Zylinderlinsen) erzeugt werden, überlagert werden, so dass so aus drei Laserstrahlen mittels eines diffraktiven optischen Element (DOE) und/oder ROE und zweier Zylinderlinsen zwei aufeinander senkrecht stehende zusammengesetzte Laserlinien mit den vorerwähnten Vorteilen erzeugbar sind.

In einer weiteren bevorzugten Ausführungsform können die Laserquelle(n), das/die kollimierende(n) optische(n) Element(e) und die interferenzoptischen und nicht-interferenzoptischen Element an und/oder in einem Optikträger montierbar sein, wobei der Optikträger selbstnivellierend ausgeführt und vorzugsweise pendelnd an vorzugsweise zwei zueinander senkrechten und in einem Betriebszustand im Wesentlichen horizontal ausgerichteten Lagerachsen aufgehängt ist. Hierdurch kann auf besonders vorteilhafte Weise eine Selbstnivellierfähigkeit des Linien-Lasergerätes erreicht werden.

In einer weiteren bevorzugten Ausführungsform kann die Trägereinrichtung eine Schwingungsdämpfung, vorzugsweise eine magnetische Dämpfung, insbesondere eine Wirbelstromdämpfung aufweisen. Durch eine solche Schwingungsdämpfung kann die Einschwingdauer und die erzielbare Einstellgenauigkeit der Laserlinien erheblich verbessert dadurch Praxisnutzen und Effizienz beim praktischen Einsatz erhöht werden.

### Zeichnung

Anhand der Zeichnungen wird die Erfindung nachstehend exemplarisch anhand eines Ausführungsbeispiels eingehend erläutert. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen, weiteren Kombinationen zusammenfassen.

Es zeigen:
- Fig. 1: Seitenaufsicht auf den Optikträger einer Ausführungsform des selbstnivellierenden Linien-Lasergerätes mit eingebauten Lasermodulen (beinhaltend u.a. Laserdiode und Kollimatorlinsen) und Strahlformungseinrichtungen (Zylinderlinse und diffraktives optisches Element), sowie mit kardanischer Aufhängung und Wirbelstromdämpfung;
- Fig. 2: perspektivische Ansicht des Gegenstandes der Fig. 1 mit dem durch die Zylinderlinse vertikal aufgeweiteten Laserstrahl;
- Fig. 3: perspektivische Ansicht des Gegenstandes der Fig. 1 mit dem durch das diffraktive optische Element horizontal und vertikal aufgefächerten Laserstrahl;
- Fig. 4: Schrägansicht des in ein Gehäuse eingebauten selbstnivellierenden Mehr-Linien-Lasergerät der Ausführungs-form der Fig. 1 mit dargestellten Laserlichtebenen.

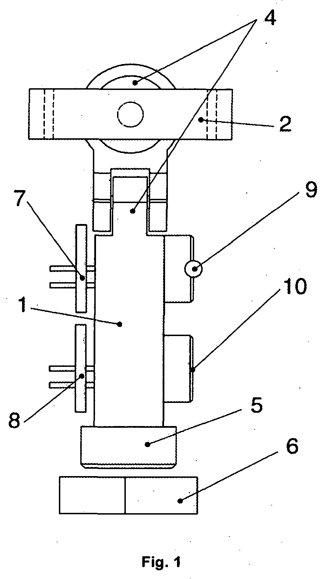

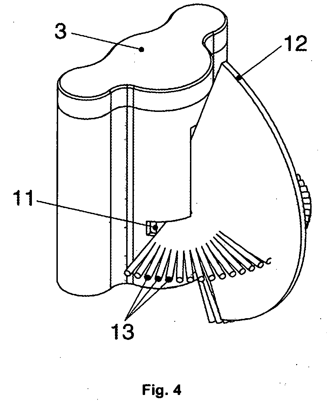

Die Darstellungen der Fig. 1 bis 3 zeigen den grundlegenden Aufbau der zentralen optischen und mechanischen Komponenten einer Ausführungsform des selbstnivellierenden Linien-Lasergerätes. Dieses weist einen Optikträger 1 auf, der vorzugsweise im Wesentlichen aus einer metallischen Druckgusslegierung (vorzugsweise Aluminium- oder Zinkdruckgusslegierung) besteht und die wesentlichen optischen Elemente, die nachstehend erläutert werden, trägt. Dieser Optikträger 1 ist pendelnd in einem Rahmenelement 2, welches mit einem Gerätegehäuse (nur in Fig. 4 mit Bzz. 3 dargestellt) verbunden ist, aufgehängt.

Die pendelnde Aufhängung des Optikträgers 1 erfolgt über ein Kreuzgelenk mit Kugellagern 4, wobei die beiden zueinander senkrechten Lagerachsen nicht in einer Ebene, sondern vertikal versetzt angeordnet sind, wodurch pro Drehachse nur ein Kugellager 4 erforderlich ist und Alignierungsprobleme und Verspannungen in den Lagerachsen, wie sie aufgrund von Fertigungstoleranzen bei der Verwendung zweier Kugellager 4 auftreten könnten, vermieden werden. Durch diesen Aufbau kann sich der Optikträger 1 um zwei Achsen frei auspendeln und im Gravitationsfeld der Erde ausrichten.

Um die Einschwingdauer des pendelnd und - im Rahmen des technisch Möglichen-möglichst reibungsfrei aufgehängten Optikträgers 1 erheblich zu verkürzen, ohne die Einstellgenauigkeit der Endposition des Optikträgers 1 im Gravitationsfeld zu verringern, besitzt der Optikträger 1 des hier dargestellten Ausführungsbeispiels eine Wirbelstromdämpfung nach dem Prinzip des Waltenhof'schen Pendels. Hierzu ist ein Kupferblock 5 am unteren, freien Ende des pendelnd aufgehängten Optikträgers 1 angebracht, wobei sich der Kupferblock 5 im Falle einer Pendelbewegung in geringem Abstand berührungsfrei über einen Permanentmagneten 6, der mit dem Gehäuse 3 fest verbunden ist, bewegt. Dieser Permanentmagnet 6 umfasst vorteilhafterweise eine Mehrzahl einzelner Magnetelemente (in diesem Fall: vier) mit vorzugsweise alternierender Magnetfeldorientierung und ist dahingehend optimiert, dass die Magnetfeldlinien mit einer möglichst hohen Magnetfelddichte und möglichst großen Magnetfeldstärkegradienten durch den Kupferblock 5 hindurchtreten und dort via elektromagnetischer Induktion ein dem Feld des Permanentmagneten 6 entgegen gerichtetes Magnetfeld erzeugen; dieses Magnetfeld dämpft die Pendelbewegung des Optikträgers 1 stark, ohne jedoch die Endposition des Optikträgers 1 zu beeinflussen, da die Dämpfung nach dem magnetischen Wirbelstromprinzip proportional zur Relativbewegungsgeschwindigkeit zwischen Permanentmagnet 6 und Kupferblock 5 ist und somit im statischen Falle nach Dämpfung der Bewegung des Optikträgers 1 entfällt.

Die Dämpfung kann auf diese Weise optimiert und beispielsweise nahezu auf den "aperiodischen Grenzfall" eingestellt werden. Mittels der Wirbelstromdämpfung stellt sich der Optikträger 1 nach dem Aufstellen des Linien-Lasergerätes oder nach einem Stoß gegen das Linien-Lasergerät innerhalb kurzer Zeit von typischerweise von 0,5 bis 5 Sekunden mit einer sehr hohen Genauigkeit von z.B. wenigen Zehntel Millimetern pro Meter im Gravitationsfeld der Erde ein. Um die genaue Ausrichtung des Optikträgers 1 im Erdmagnetfeld zu justieren, kann der Optikträger in der Nähe des Kupferblocks zwei Tarierschrauben aufweisen (z.B. Madenschrauben; nicht dargestellt), die zueinander und zur Schwerpunktlinie des Optikträgers 1 vorzugsweise 90°-Winkel - sowie vorzugsweise zur Ausrichtung des horizontalen Laserstrahls 0°- bzw. 90°-Winkel - einschließen und über deren Einschraubtiefe die Schwerpunktlage des Optikträgers 1 und hierdurch die exakte Ausrichtung der Laserlinien geringfügig korrigiert werden kann.

Ferner besitzt der Permanentmagnet 6, der einen größeren Durchmesser aufweist als der Kupferblock 5, an dessen Außenumfang einen Radialanschlag (nicht dargestellt) für besagten Kupferblock 5, wodurch die Pendelbewegung des Optikträgers 1 (und damit der Selbstnivellierbereich des selbstnivellierenden Linien-Lasergerätes) beispielsweise auf einen bestimmten Wert (beispielsweise im Bereich von 5° bis 15°, typischerweise auf maximal 5° oder 8°) begrenzt werden kann. Hierdurch kann ein Anschlagen des Optikträgers 1 oder der damit verbundenen Bauteile am Gehäuse 3 und ein Überdehnen beispielsweise der (hochflexiblen und biegeschlaffen, jedoch äußerst dünnen und zugempfindlichen) elektrischen Versorgungskabel (nicht dargestellt) für die Laserquellen 7,8 beispielsweise bei sehr schräger Aufstellung des Linien-Lasergerätes, im Betrieb oder beim Transport verhindert werden. Bei Berührung zwischen dem Kupferblock 5 und dem Radialanschlag des Permanentmagneten 6 kann ein elektrischer Kontakt in einem Kontrollstromkreis geschlossen und der Benutzer so vor einem nicht korrekt nivellierten System z.B. durch ein optisches oder akustisches Signal oder durch periodisches Dunkeltasten (Blinken) der Laserquellen 7,8 gewarnt werden.

Der optische Aufbau weist in dem hier dargestellten Ausführungsbeispiel zwei komplanar und senkrecht zur Schwerpunktachse des Optikträgers 1 übereinander angeordnete Lasermodule 7,8 mit jeweils einer Laserdiode (nicht dargestellt) und einem kollimierenden optischen Element, das hier als Kollimatorlinse (nicht dargestellt) ausgebildet ist, auf.

Als Laserstrahlquellen 7,8 kommen preisgünstige "low-power" Laserdioden zum Einsatz, die inhärent, d.h. aufgrund des physikalischen Entstehungsprinzips elliptisch divergente Lichtkegel erzeugen. Diese Lichtkegel werden durch Kollimatorlinsen (nicht dargestellt) parallelgerichtet. Da der Justierung zwischen Laserdiode und Kollimatorlinse eine wesentliche Bedeutung zukommt, ist es unter produktionstechnischen und Kostengesichtspunkten vorteilhaft, Laserdiode und Kollimatorlinse zu einem Lasermodul 7,8 als Baugruppe zusammenzufassen, die bereits ein parallelgerichtetes, elliptisches Strahlenbündel emittieren, und so - als vorgefertigtes Lasermodul 7,8 - in den Optikträger 1 einzubauen.

Weiterhin kann das Lasermodul 7,8 - vor oder nach dem Kollimator - noch eine Maske oder Blende enthalten, die den elliptischen Laserstrahl beispielsweise rund maskiert, die jedoch in diesem Ausführungsbeispiel nicht enthalten ist.

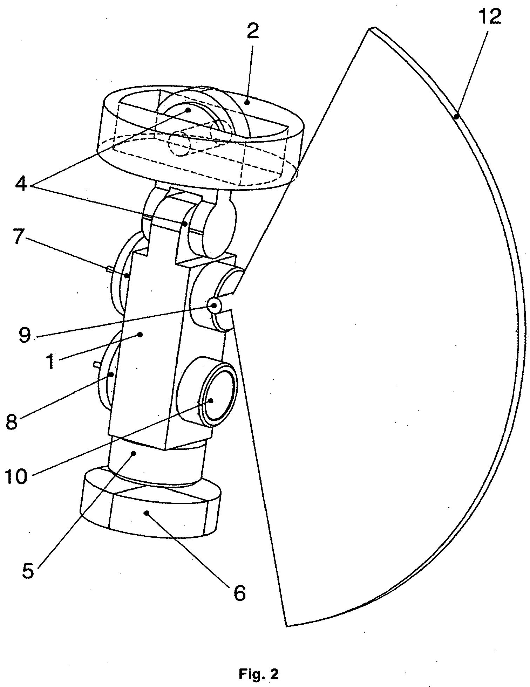

Der erste der beiden Laserstrahlen - hier derjenige des oberen Lasermoduls 7 - tritt nach dessen Parallelrichtung durch die Kollimatorlinse durch eine horizontal angeordnete Zylinderlinse 9, durch die dieser Laserstrahl in einer vertikalen Ebene aufgeweitet wird, wodurch eine Laserlinie 12 beispielsweise auf Wänden und Gegenständen mit einem nutzbaren Winkelbereich von mehr als 120° erzeugt werden kann (s. Fig. 2). Der elliptische Laserstrahl der Laserdiode ist so orientiert, dass seine lange Halbachse auf der Längsachse der Zylinderlinse 9 (in diesem Ausführungsbeispiel in der Form eines geraden Kreiszylinders) senkrecht steht, so dass hier also der elliptische Laserstrahl mit seiner langen Halbachse in vertikaler Ausrichtung angeordnet ist, während die Zylinderlinse 9 senkrecht auf der Strahlmittelachse des Laserstrahls steht und sich mit ihrer horizontal orientierten Längsachse in Richtung der kurzen Halbachse des elliptischen Strahlquerschnitts erstreckt.

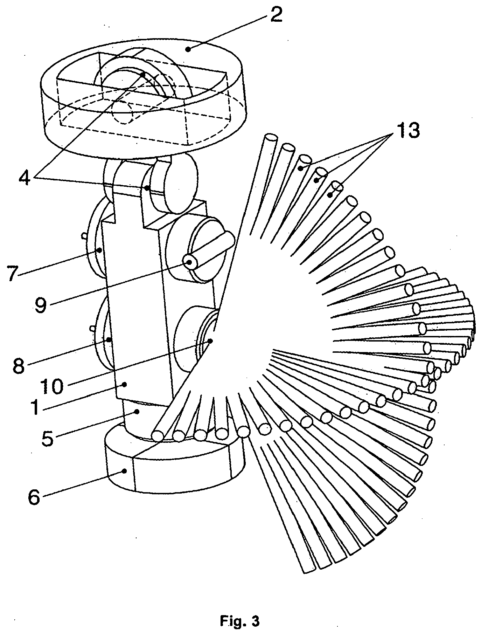

Der zweite der beiden Laserstrahlen - hier derjenige des unteren Lasermoduls 8 - tritt nach dessen Parallelrichtung durch die Kollimatorlinse dann durch ein interferenzoptisches Element 10, wie beispielsweise ein holographisches Element, ein optisches Gitter oder - wie in diesem Ausführungsbeispiel - ein diffraktives optisches Element (DOE) und/oder refraktives optisches Element (ROE) 10, wobei der flächige Laserstrahl in eine Vielzahl kohärenter Partiallichtquellen zerlegt wird, deren Interferenz untereinander ein nahezu frei definierbares projizierbares Helligkeitsmuster erzeugen kann. Hierdurch wird in diesem Ausführungsbeispiel der Laserstrahl kreuzförmig in zwei zueinander senkrecht stehenden Ebenen in jeweils einem Winkelbereich von mehr als 120° aufgespalten, wodurch in den zwei Ebenen durch die in Laserteilstrahlen 13 aufgefächerten Laserstrahlen beispielsweise eine Serie äquidistanter Laserpunkte erzeugt werden kann (s. Fig. 3). Alternativ könnte auch ein diffraktives optisches Element (DOE) und/oder ROE 10 vorgesehen sein, das den Laserstrahl nur iri einer Dimension aufweitet oder zusätzliche Linien, Markierungen und/oder Lichtfiguren erzeugt.

Im Falle eines diffraktiven optischen Elementes (DOE) und/oder refraktiven optischen Elementes (ROE) 10 kann die effektiv nutzbare Fläche des diffraktiven optischen Elementes (DOE) und/oder refraktiven optischen Elementes (ROE) 10 problemlos an den elliptischen Strahlquerschnitt angepasst werden. Die Orientierung des elliptischen Laserstrahls ist von untergeordneter Bedeutung; zweckmäßigerweise wurde in diesem Ausführungsbeispiel die lange Halbachse des elliptischen Strahlquerschnitts des Laserstrahls ebenfalls vertikal ausgerichtet, um so insbesondere den nutzbaren Winkelbereich und den Helligkeitsabfall der vertikalen Laserlinie zu optimieren.

In dem hier dargestellten Ausführungsbeispiel wird also der erste Laserstrahl durch eine horizontal angeordnete Zylinderlinse 9 in vertikaler Ebene in einem nutzbaren Winkelbereich von mehr als 120° aufgeweitet. Der zweite Laserstrahl wird durch das diffraktive optische Element (DOE) und/oder refraktives optisches Element (ROE) 10 gleichzeitig in horizontaler und vertikaler Ebene in einem Winkelbereich von mehr als 120° in eine Serie diskreter Teilstrahlen aufgefächert, deren in vertikaler Ebene aufgefächerten Teilstrahlen aufgrund der komplanaren Anordnung der beider Lasermodule 7,8 mit dem durch die Zylinderlinse 9 vertikal aufgeweiteten Laserstrahl in einer Ebene zusammenfallen. Hierdurch erhält man eine projizierbare kontinuierliche vertikale Laserlinie, die von einer Serie heller Laserpunkte überlagert ist, sowie in horizontaler Ebene eine diskontinuierliche Laserlinie oder eine Serie von Laserpunkten, die sämtlich in einer Ebene angeordnet sind und exakt auf der vertikalen Laserlinie senkrecht stehen.

Das Gerätegehäuse 3 (s. Fig. 4) besteht vorzugsweise im Wesentlichen aus einem polymeren Werkstoff oder einem beispielsweise faserarmierten Polymer-Verbundwerkstoff (z.B. faserverstärkter Duroplast oder Thermoplast). Das Gerätegehäuse 3 umgibt die zuvor beschriebene mechanische und optische Anordnung und schützt diese vor mechanischer Beschädigung und vermindert die Gefahr von Verunreinigungen. Das Gerätegehäuse 3 weist eine kreuzförmige Öffnung 11 zum Austritt der horizontal und vertikal aufgefächerten Laserstrahlen auf. Diese Öffnung 11 kann durch eine optisch neutrale, den Strahlengang der aufgefächerten Laserstrahlen nicht verzerrende Abdeckung aus Mineralglas oder vorzugsweise einem transparenten, schlagzähen Kunststoff geschlossen sein.

Weiterhin nimmt das Gehäuse 3 in dem hier dargestellten Ausführungsbeispiel noch zwei Batterien oder Akkus zur Stromversorgung (nicht dargestellt), Betätigungselemente, vorzugsweise Folientaster (nicht dargestellt) zum gemeinsamen und getrennten Schalten der beiden Laserquellen, sowie eine elektronische Schaltung (nicht dargestellt) zum Betrieb der Laserquellen 7,8 auf. Die Stromversorgung der Laserquellen 7,8 von der im Gehäuse montierten elektronischen Schaltung zu den im Optikträger 1 pendelnd aufgehängten Laserdioden erfolgt über sehr dünne, hochflexible und biegeschlaffe elektrische Versorgungskabel (nicht dargestellt), die nahe am Aufhängungspunkt des Optikträgers 1 vorbei geführt sind, um das Auspendeln des Optikträgers 1 im Gravitationsfeld und die Nivelliergenauigkeit möglichst wenig zu beeinträchtigen.

Merkmale unterschiedlicher Ausführungsformen sind frei miteinander kombinierbar. Begriffe in der Anmeldung, die die Lage unterschiedlicher Komponenten zueinander beschreiben, wie "exakt 90°" oder "senkrecht zueinander", "auf einer Linie", "innerhalb der optischen Ebene" oder ähnliche beschreiben die gewünschte Idealposition/-lage und beinhalten, dass sich aufgrund der mechanischen/optischen Ausgestaltung gewisse Abweichungen und Ungenauigkeiten ergeben können. Im Falle von Bereichsangaben sind nicht nur die angegebenen Endwerte, sondern auch alle dazwischen liegenden Werte und darin enthaltenen Teilbereiche mit umfasst. Wird in dieser Anmeldung von einer Laserlinie oder projizierbaren Laserlinie gesprochen, so ist hierbei die geometrische Figur gemeint, die entsteht, wenn der unter Verwendung von interferenzoptischen und nicht-interferenzoptischen Elementen in einer Ebene aufgeweitete Laserstrahl auf einen ebenen Gegenstand fällt und dort in der Projektion eine Laserlichtlinie erzeugt.

## Patentansprüche

1. Selbstnivellierendes Linien-Lasergerät mit zwei Laserstrahlen und Mitteln (9, 10) zur Aufweitung der zwei Laserstrahlen in zumindest einer Ebene, mit einem mikrooptischen Element (10), sowie mit einem nicht-interferenzoptischen Element (9) wobei ein erster Laserstrahl (13) durch das mikro-optische Element (10) in einer ersten Ebene aufweitbar ist, **dadurch gekennzeichnet, daß** ein zweiter Laserstrahl (12) durch das nicht-interferenzoptische Element (9) in derselben ersten Ebene aufweitbar ist, wodurch der mikro-optisch aufgeweitete Laserstrahl (13) mit dem nicht-interferenzoptisch aufgeweiteten Laserstrahl (12) zumindest teilbereichsweise in dieser ersten Ebene überlagerbar ist.

2. Selbstnivellierendes Linien-Lasergerät nach Anspruch 1, **dadurch gekennzeichnet, dass** der Laserstrahl durch das mikrooptische Element (10) in einer ersten Ebene oder in einer zweiten Ebene aufweitbar ist.

3. Selbstnivellierendes Linien-Lasergerät nach Anspruch 1, **dadurch gekennzeichnet, dass** der Laserstrahl durch das mikrooptische Element (10) in einer ersten Ebene und in einer zweiten Ebene aufweitbar ist.

4. Selbstnivellierendes Linien-Lasergerät nach Anspruch 3, **dadurch gekennzeichnet, dass** erste und zweite Ebene senkrecht aufeinander stehen.

5. Selbstnivellierendes Linien-Lasergerät nach Anspruch 1, **dadurch gekennzeichnet, dass** das nicht-interferenzoptische Element (9) eine Linse mit in zueinander senkrechten, die optische Achse umfassenden Ebenen unterschiedlicher Brechkraft, vorzugsweise eine Zylinderlinse, aufweist.

6. Selbstnivellierendes Linien-Lasergerät nach mindestens einem der vorhergehenden Ansprüche, **dadurch gekennzeichnet, dass** das mikrooptische Element (10) ein Diffraktives Optisches Element (DOE) und/oder mikro-Refraktives-Optisches-Element (ROE) aufweist.

7. Selbstnivellierendes Linien-Lasergerät nach mindestens einem der vorhergehenden Ansprüche 3 bis 6, **dadurch gekennzeichnet, dass** der Laserstrahl durch das mikrooptische Element (10) kreuzförmig in zwei aufeinander senkrecht stehenden Ebenen aufweitbar ist.

8. Selbstnivellierendes Linien-Lasergerät nach mindestens einem der vorhergehenden Ansprüche, **dadurch gekennzeichnet, dass** durch das mikrooptische Element (10) in der Projektion eine Serie von Laserpunkten, die auf einer Linie, vorzugsweise auf zwei aufeinander senkrecht stehenden Linien angeordnet sind, erzeugbar ist.

9. Selbstnivellierendes Linien-Lasergerät nach Anspruch 8, **dadurch gekennzeichnet, dass** durch die Laserpunkte die Helligkeit der durch das nicht-interferenzoptische Element projizierbaren Laserlinie punktuell erhöhbar ist.

10. Selbstnivellierendes Linien-Lasergerät nach mindestens einem der vorhergehenden Ansprüche, **dadurch gekennzeichnet, dass** zumindest ein Laserstrahl durch eine Laserdiode als Laserquelle erzeugbar ist und vorzugsweise durch zumindest ein kollimierendes optisches Element, insbesondere eine Kollimatorlinse, kollimierbar ist.

11. Selbstnivellierendes Linien-Lasergerät nach mindestens einem der vorhergehenden Ansprüche, **dadurch gekennzeichnet, dass** zumindest zwei Laserstrahlen mittels Strahlteilung vorzugsweise durch ein teilreflektierendes optisches Element aus einer Laserquelle, vorzugsweise aus einer Laserdiode auskoppelbar sind.

12. Selbstnivellierendes Linien-Lasergerät nach mindestens einem der vorhergehenden Ansprüche 1 bis 10, **dadurch gekennzeichnet, dass** zumindest zwei Laserquellen zueinander koplanar angeordnet sind.

13. Selbstnivellierendes Linien-Lasergerät nach mindestens einem der vorhergehenden Ansprüche, **dadurch gekennzeichnet, dass** das selbstnivellierende Linien-Lasergerät zumindest einen weiteren Laserstrahl und ein weiteres nicht-interferenzoptisches und/oder interferenzoptisches Element aufweist.

14. Selbstnivellierendes Linien-Lasergerät nach mindestens einem der vorhergehenden Ansprüche 1 bis 13, **dadurch gekennzeichnet, dass** die Laserquelle(n), das/die kollimierende(n) optische(n) Element(e) und die interferenzoptischen und nicht-interferenzoptischen Elemente an und/oder in einem Optikträger (1) montierbar sind, wobei der Optikträgers (1) selbstnivellierend ausgeführt und vorzugsweise pendelnd an vorzugsweise zwei zueinander senkrechten und in einem Betriebszustand im Wesentlichen horizontal ausgerichteten Lagerachsen aufgehängt ist.

15. Selbstnivellierendes Linien-Lasergerät nach mindestens einem der vorhergehenden Ansprüche, **dadurch gekennzeichnet, dass** ein Optikträger (1), der zumindest das mikrooptische Element aufweist, eine Schwingungsdämpfung, vorzugsweise eine magnetische Dämpfung, insbesondere eine Wirbelstromdämpfung (5,6) aufweist.

## Claims

1. Self-levelling line laser device with two laser beams and means (9, 10) for expanding the two laser beams in at least one plane, with a micro-optical element (10) and a non-interference optical element (9), wherein a first laser beam (13) is expandable by the micro-optical element (10) in a first plane, **characterized in that** a second laser beam (12) is expandable in the same first plane by way of the non-interference optical element (9), as a result of which the laser beam (13) expanded by micro-optical means is superimposeable on the laser beam (12) expanded by non-interference optical means in this first plane, at least in portions.

2. Self-levelling line laser device according to Claim 1, **characterized in that** the laser beam is expandable in a first plane or in a second plane by way of the micro-optical element (10).

3. Self-levelling line laser device according to Claim 1, **characterized in that** the laser beam is expandable in a first plane and in a second plane by way of the micro-optical element (10).

4. Self-levelling line laser device according to Claim 3, **characterized in that** the first and second plane are perpendicular to one another.

5. Self-levelling line laser device according to Claim 1, **characterized in that** the non-interference optical element (9) has a lens with different refractive powers in mutually perpendicular planes comprising the optical axis, preferably a cylindrical lens.

6. Self-levelling line laser device according to at least one of the preceding claims, **characterized in that** the micro-optical element (10) has a diffractive optical element (DOE) and/or a micro-refractive optical element (ROE).

7. Self-levelling line laser device according to at least one of the preceding Claims 3 to 6, **characterized in that** the laser beam is expandable in a cross-shaped manner in two mutually perpendicular planes by way of the micro-optical element (10).

8. Self-levelling line laser device according to at least one of the preceding claims, **characterized in that** a series of laser spots that are arranged on a line, preferably on two mutually perpendicular lines, is generable in the projection by the micro-optical element (10).

9. Self-levelling line laser device according to Claim 8, **characterized in that** the brightness of the laser line projectable by the non-interference optical element is increasable at points by way of the laser spots.

10. Self-levelling line laser device according to at least one of the preceding claims, **characterized in that** at least one laser beam is generable by a laser diode as a laser source and preferably collimatable by at least one collimating optical element, more particularly a collimator lens.

11. Self-levelling line laser device according to at least one of the preceding claims, **characterized in that** at least two laser beams are decoupleable from a laser source, preferably from a laser diode, by means of beam splitting, preferably by way of a partly reflecting optical element.

12. Self-levelling line laser device according to at least one of the preceding Claims 1 to 10, **characterized in that** at least two laser sources are arranged in a co-planar manner in relation to one another.

13. Self-levelling line laser device according to at least one of the preceding claims, **characterized in that** the self-levelling line laser device has at least one further laser beam and one further non-interference optical and/or interference optical element.

14. Self-levelling line laser device according to at least one of the preceding Claims 1 to 13, **characterized in that** the laser source(s), the collimating optical element(s) and the interference optical and non-interference optical elements are mountable on and/or in an optical support (1), wherein the optical support (1) has a self-levelling embodiment and it is suspended, preferably in a pendular manner, on preferably two mount axes aligned perpendicular to one another and substantially horizontally in an operating state.

15. Self-levelling line laser device according to at least one of the preceding claims, **characterized in that** an optical support (1) which has at least the micro-optical element, has vibration damping, preferably magnetic damping, in particular eddy current damping (5, 6).

## Revendications

1. Appareil à laser linéaire autonivelant comprenant deux rayons laser et des moyens (9, 10) servant à élargir les deux rayons laser dans au moins un plan, comprenant un élément micro-optique (10) et comprenant un élément optiquement non interférentiel (9), un premier rayon laser (13) pouvant être élargi par l'élément micro-optique (10) dans un premier plan, **caractérisé en ce qu'**un deuxième rayon laser (12) peut être élargi dans le même premier plan par l'élément optiquement non interférentiel (9), le rayon laser (13) élargi de manière micro-optique pouvant ainsi être superposé au rayon laser (12) élargi sans interférences optiques dans ce premier plan au moins dans certaines zones.

2. Appareil à laser linéaire autonivelant selon la revendication 1, **caractérisé en ce que** le rayon laser peut être élargi par l'élément micro-optique (10) dans un premier plan ou dans un deuxième plan.

3. Appareil à laser linéaire autonivelant selon la revendication 1, **caractérisé en ce que** le rayon laser peut être élargi par l'élément micro-optique (10) dans un premier plan et dans un deuxième plan.

4. Appareil à laser linéaire autonivelant selon la revendication 3, **caractérisé en ce que** les premier et deuxième plans sont perpendiculaires l'un à l'autre.

5. Appareil à laser linéaire autonivelant selon la revendication 1, **caractérisé en ce que** l'élément optiquement non interférentiel (9) possède une lentille ayant une réfringence différente dans les plans mutuellement perpendiculaires englobant l'axe optique, de préférence une lentille cylindrique.

6. Appareil à laser linéaire autonivelant selon au moins l'une des revendications précédentes, **caractérisé en ce que** l'élément micro-optique (10) possède un élément optique diffractif (DOE) et/ou un élément optique microréfractif (ROE).

7. Appareil à laser linéaire autonivelant selon au moins l'une des revendications 3 à 6, **caractérisé en ce que** le rayon laser peut être élargi par l'élément micro-optique (10) en forme de croix dans deux plans perpendiculaires l'un à l'autre.

8. Appareil à laser linéaire autonivelant selon au moins l'une des revendications précédentes, **caractérisé en ce que** l'élément micro-optique (10) permet de générer dans la projection une série de points laser qui sont disposés sur une ligne, de préférence sur deux lignes perpendiculaires l'une à l'autre.

9. Appareil à laser linéaire autonivelant selon la revendication 8, **caractérisé en ce que** les points laser permettent d'augmenter ponctuellement la luminosité de la ligne laser qui peut être projetée à travers l'élément optiquement non interférentiel.

10. Appareil à laser linéaire autonivelant selon au moins l'une des revendications précédentes, **caractérisé en ce qu'**au moins un rayon laser peut être généré par une diode laser faisant office de source laser et peut être collimaté de préférence par au moins un élément optique collimateur, notamment une lentille de collimation.

11. Appareil à laser linéaire autonivelant selon au moins l'une des revendications précédentes, **caractérisé en ce qu'**au moins deux rayons laser peuvent être déclenchés depuis une source laser, de préférence depuis une diode laser, par séparation de faisceau de préférence par un élément optique partiellement réfléchissant.

12. Appareil à laser linéaire autonivelant selon au moins l'une des revendications 1 à 10, **caractérisé en ce qu'**au moins deux sources laser sont disposées de manière coplanaire l'une par rapport à l'autre.

13. Appareil à laser linéaire autonivelant selon au moins l'une des revendications précédentes, **caractérisé en ce que** l'appareil à laser linéaire autonivelant possède au moins un rayon laser supplémentaire et un élément optiquement non interférentiel et/ou optiquement interférentiel supplémentaire.

14. Appareil à laser linéaire autonivelant selon au moins l'une des revendications 1 à 13, **caractérisé en ce que** la/les source(s) laser, le(s) élément(s) optique(s) collimateur(s) et les éléments optiquement interférentiels et optiquement non interférentiels peuvent être montés sur et/ou dans un support d'optique (1), le support d'optique (1) étant exécuté autonivelant et étant de préférence suspendu comme un pendule à de préférence deux axes de palier perpendiculaires l'un à l'autre et orientés sensiblement horizontalement en situation de fonctionnement.

15. Appareil à laser linéaire autonivelant selon au moins l'une des revendications précédentes, **caractérisé en ce qu'**un support d'optique (1) qui possède au moins l'élément micro-optique possède un système amortisseur de vibrations, de préférence un système amortisseur magnétique, notamment un système amortisseur à courant de Foucault (5, 6).
